Europäisches Patentamt

European Patent Office

Office européen des brevets

(19)

(11) Veröffentlichungsnummer : **0 121 646**
**B1**

(12) **EUROPÄISCHE PATENTSCHRIFT**

(45) Veröffentlichungstag der Patentschrift :
29.07.87

(21) Anmeldenummer : 84100218.1

(22) Anmeldetag : 11.01.84

(51) Int. Cl.⁴ : **A 47 J 37/06**, F 24 C 15/16

(54) **Infrarotbeheiztes Backgerät und dessen Verwendung.**

(30) Priorität : 15.03.83 CH 1406/83

(43) Veröffentlichungstag der Anmeldung :
17.10.84 Patentblatt 84/42

(45) Bekanntmachung des Hinweises auf die Patenterteilung : 29.07.87 Patentblatt 87/31

(84) Benannte Vertragsstaaten :
AT BE CH DE FR IT LI LU NL

(56) Entgegenhaltungen :
DE-A- 2 652 403

(73) Patentinhaber : RAPELLI S.A.
Industria salumi
CH-6865 Stabio (CH)

(72) Erfinder : Pervangher, Ernesto
Via Priv. Tassino 7
CH-6924 Sorengo (CH)
Erfinder : Lombardi, Attilio
Via Abbazia 56
I-21100 Varese (IT)
Erfinder : Malnati, Giuseppe
Viale Rimembranze 14
I-Bisuschio/Varese (IT)

(74) Vertreter : Keller, René, Dr. et al
Patentanwälte Hartmut Keller, Dr. René Keller Postfach 12
CH-3000 Bern 7 (CH)

## Beschreibung

Die Erfindung betrifft ein infrarotbeheiztes Backgerät gemäss dem Oberbegriff des Patentanspruchs 1 und eine Verwendung des Backgeräts gemäss dem Patentanspruch 11.

Ein Backgerät dieser Art ist aus der DE-A- 26 52 403 bekannt. Es hat zwei in einem Gehäuse angeordnete Reflektoren, die je mit einem Infrarotstrahler versehen sind und in der Backstellung einen zwischen ihnen angeordneten Rost für das Backgut umschliessen. Das Gehäuse hat eine Klapptüre, die mittels eines Getriebes mit dem oberen Reflektor verbunden ist, so dass dieser beim Oeffnen der Klapptüre nach oben geschwenkt wird und das Backgut eingegeben und entnommen werden kann. Der untere Reflektor ist stationär unter dem Rost montiert.

Beim Eingeben bzw. Entnehmen des Backguts muss man tief in das erhitzte Gehäuse hineingreifen, und es besteht die Gefahr, dass man sich beim Auflegen bzw. Entnehmen des Backguts auf den bzw. vom hinteren Teil des Rosts die Hände am nach längerem Betrieb heissen, oberen Reflektor verbrennt.

Hier will die Erfindung Abhilfe schaffen. Ihr liegt die Aufgabe zugrunde, die Gefahr einer Verbrennung der Hände beim Eingeben und Entnehmen des Backguts zu vermeiden.

Die erfindungsgemässe Lösung dieser Aufgabe ist Gegenstand des Patentanspruchs 1. Bevorzugte Ausführungsarten des Backgeräts sind in den Patentansprüchen 2 bis 10 beschrieben.

Im folgenden wird ein Ausführungsbeispiel der Erfindung anhand der Zeichnung näher erläutert. Es zeigen :

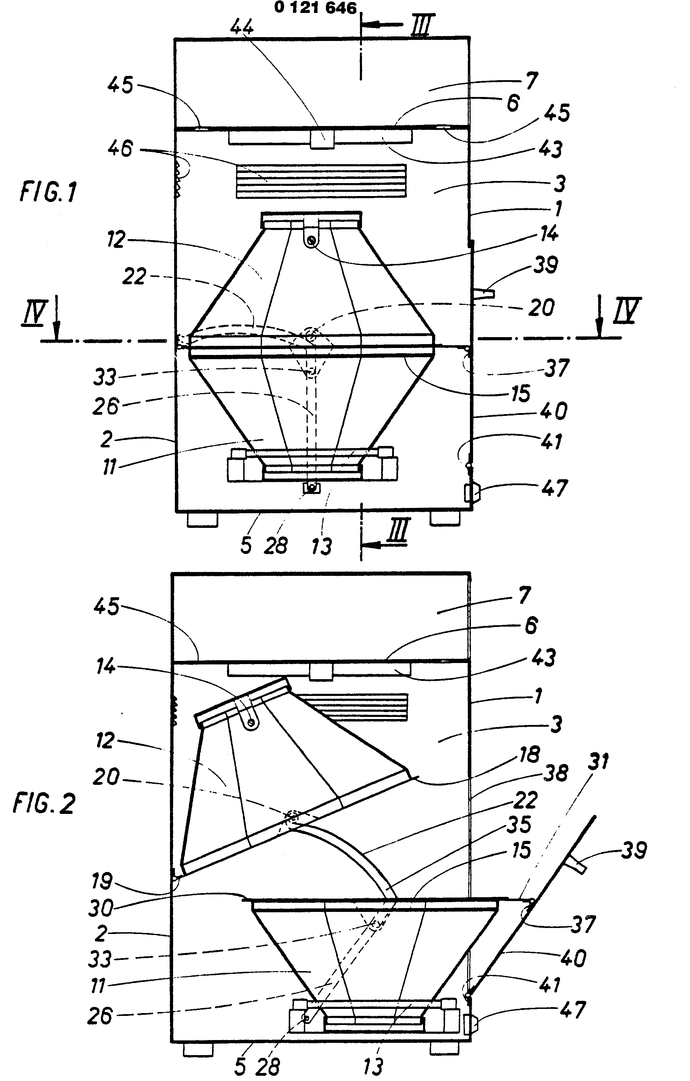

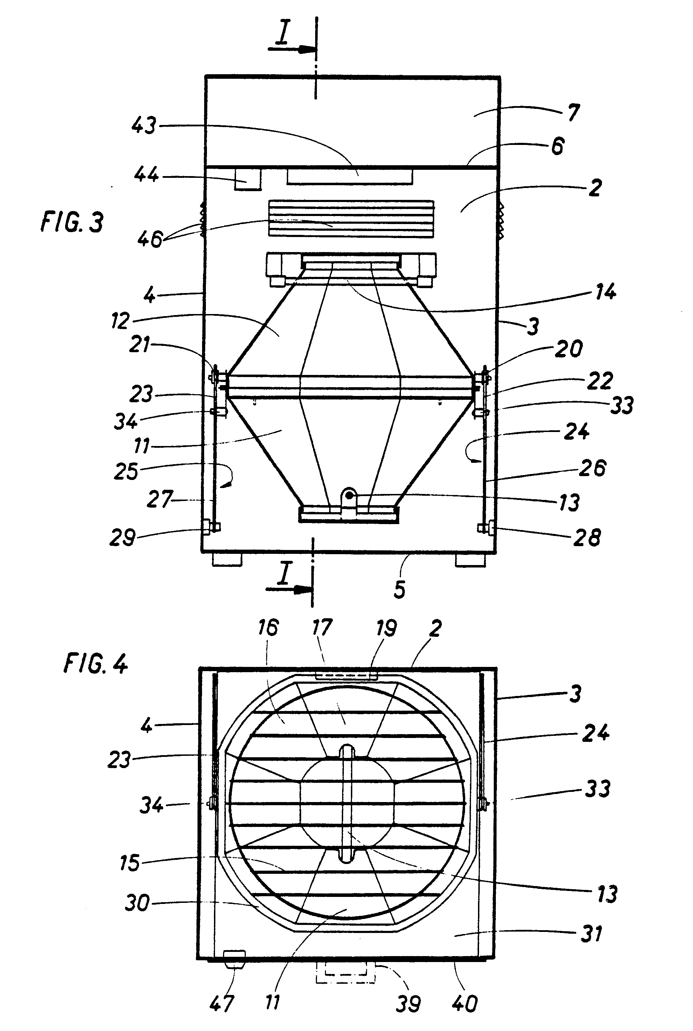

Fig. 1 einen vertikalen Schnitt durch ein erfindungsgemässes Backgerät, in der Backstellung, (Schnitt nach der Linie I-I in Fig. 3), Fig. 2 einen Fig. 1 entsprechenden Schnitt durch das Backgerät in der Stellung zum Eingeben bzw. Entnehmen des Backguts, Fig. 3 einen Schnitt nach der Linie III-III in Fig. 1 und Fig. 4 einen Schnitt nach der Linie IV-IV in Fig. 1.

Der in der Zeichnung dargestellte Backofen hat ein Gehäuse, dessen Vorder- und Rückwand mit 1 und 2 und dessen beide Seitenwände mit 3 und 4 bezeichnet sind. Zwischen dem Gehäuseboden 5 und einem an der Oberseite des Gehäuses angeordneten, mit einer Heizplatte 6 versehenen Auftaufach 7 zum Auftauen von tiefgefrorenem Backgut sind zwei Reflektoren 11, 12 angeordnet, in denen je eine Halogenlampe 13, 14 angeordnet ist. In die Oeffnung des unteren Reflektors 11 ist ein mit Kunststoff der Markenbezeichnung Teflon beschichteter Stahlrost 15 eingelegt, der aus an einem Ring befestigten, parallelen Stäben besteht. Die Enden zweier Stäbe sind nach unten gebogen und in im oberen Randbereich des Reflektors 11 vorgesehene Löcher gesteckt. Die röhrenförmigen Quarzkolben der beiden Halogenlampen 13, 14 sind in zueinander senkrechter Richtung angeordnet und die Reflektoren 11, 12 sind so geformt, dass bei in der Backstellung gemäss Fig. 1 befindlichen Reflektoren 11, 12 die Strahlungsflussdichte auf der ganzen Rostfläche 15 annähernd konstant ist. Zu diesem Zweck haben die Reflektoren 11, 12 je acht in Umfangsrichtung aufeinander folgende, abwechselnd ebene und gekrümmte Reflexionsflächen, von denen zwei in Fig. 4 mit 16, 17 bezeichnet sind.

Der hintere Teil des nach aussen gebogenen Rands 18 des oberen Reflektors 12 ist an einem horizontal an der Gehäuserückwand 2 angeordneten Scharnier 19 befestigt. Die beiden Seitenteile des Rands 18 tragen je ein Lager für eine Führungsrolle 20, 21. Die Achsen der beiden Rollen 20, 21 fluchten miteinander in horizontaler, zur Rückwand 2 paralleler Richtung. Die beiden Rollen 20, 21 haben an beiden Innenkanten ihrer Lauffläche je einen Spurkranz mit denen sie auf den freien Armen 22, 23 zweier Winkelstücke 24, 25 geführt sind, deren andere Arme 26, 27 an ihren Enden schwenkbar um unmittelbar über dem Gehäuseboden 5 an den Seitenwänden 3, 4 angeordnete, miteinander fluchtende, horizontale und zur Rückwand 2 parallele Achsen 28, 29 gelagert sind. An der Unterseite des nach aussen gebogenen Rands 30 des unteren Reflektors 11 ist ein mit einer dem Reflektor angepassten Oeffnung versehenes, rechteckiges Blech 31 befestigt. An den an die Seitenwände 3, 4 angrenzenden Rändern des Blechs 31 sind nach unten ragende Lappen angebracht, die durch Drehgelenke 33, 34 mit den oberen, an die Scheitel 35 der Winkelstücke 24, 25 angrenzenden Enden der Arme 26, 27 verbunden sind. Der vordere Teil des Blechs 31 ist mittels eines Scharniers 37 etwa in der Mitte einer zum Verschliessen einer Oeffnung 38 in der Vorderwand 1 dienenden, mit einem Griff 39 versehenen Klapptüre 40 angelenkt, die schwenkbar an einem am unteren Rand der Oeffnung 38 angebrachten Scharnier 41 gelagert ist.

Die beiden Arme 26, 27 und die Klapptüre 40 bilden die Parallelogrammlenker bzw. -kurbeln und das Blech 31 bildet die Koppel einer Parallelführung, mittels welcher der untere Reflektor 11 unter Beibehaltung der horizontalen Lage des Rosts 15 aus der Stellung von Fig. 1 nach vorne und unten in die Stellung von Fig. 2 führbar ist. Dabei werden die, Führungsschienen für die Rollen 20, 21 bildenden, freien Arme 22, 23 aus der in Fig. 1 in die in Fig. 2 dargestellte Lage bewegt, wobei sie einerseits aus ihrer in Fig. 1 annähernd horizontalen Lage im Uhrzeigersinn um die Drehgelenke 33, 34 nach oben schwenken und andererseits mit den Drehgelenken in Richtung zur Vorderwand 1 und etwas nach unten bewegt werden. Die Führungsrollen 20, 21 des um die ortsfeste Scharnierachse 19 schwenkbaren, oberen Reflektors 12 laufen dabei von den an den Scheitel 35 angrenzenden zu den freien Enden der Arme 22, 23 und der Reflektor 12 schwenkt aus der Stellung von Fig. 1 nach oben in die Stellung von Fig. 2.

Im Betrieb des Backgeräts wird die durch ein Widerstandsheizelement 43 beheizte Bodenplatte 6 des Auftaufachs 7 mittels eines Thermostats 44 dauernd auf einer Betriebstemperatur von z. B. 120 °C gehalten. In der Platte 6 sind ferner vorne und hinten je eine Reihe Löcher 45 vorgesehen, durch welche die von den Halogenlampen 13, 14 erhitzte Luft in das an der Vorderseite offene Auftaufach 7 strömen kann. Damit bei längerem Betrieb des Geräts dessen Wände nicht infolge eines Hitzestaus zu heiss werden, sind in den Wänden 2-4 WärmeableitJalousien 46 angeordnet. Die Halogenlampen 13, 14 werden durch einen über der Achse 28 angeordneten, nicht dargestellten Druckknopfschalter eingeschaltet, der vom Arm 26 betätigt wird, wenn dieser die in Fig. 1 dargestellte, vertikale Stellung erreicht, d. h. wenn die Klapptüre 40 geschlossen ist. Ferner ist eine Schaltuhr 47 vorgesehen, mittels der die Einschaltdauer der Halogenlampen 13, 14 einstellbar ist, und die mit einer das Brennen der Halogenlampen 13, 14 anzeigenden Signallampe versehen ist.

Das Backgerät ist insbesondere zum Backen von Hamburgern, Pizzen und Kleingebäck bestimmt. Es wird beispielsweise wie folgt verwendet : Das Backgut wird in eine für die Infrarotstrahlung durchlässige Kunststoff-Folie, zum Beispiel eine durchsichtige, möglichst gut hitzebeständige Polyester-Folie eingepackt, in der es tiefgefroren gelagert werden kann. Zum Auftauen wird das eingepackte Backgut in das Auftaufach 7 gelegt, wobei es bei der erwähnten Betriebstemperatur der Heizplatte 6 innert etwa 2 Min. aufgetaut wird. Daraufhin wird das Backgut bei in der Stellung von Fig. 2 befindlichem Backgerät auf den Rost 15 gelegt, die gewünschte Backzeit an der Schaltuhr 47 eingestellt und die Klapptüre 40 geschlossen. Dabei werden die beiden Reflektoren 11, 12 in die in Fig. 1 dargestellte Backstellung bewegt, in der ihre Ränder 18, 30 dicht aneinander anliegen und die Reflektoren somit den Rost 15 mit dem Backgut dicht umschliessen. Beim Erreichen der Backstellung betätigt der Arm 26 den Druckknopfschalter, wodurch die Halogenlampen 13, 14 eingeschaltet werden und die Schaltuhr 47 zu laufen beginnt. Es hat sich gezeigt, dass durch die beim Backvorgang um das Backgut geschlossene Anordnung der beiden Reflektoren 11, 12 und die dadurch gewährleistete Konzentrierung der gesamten Infrarotstrahlung der Lampen 13, 14 auf das Backgut, Hamburger, Pizzen und dgl. innert etwa 2 Min. fertig gebacken werden können und dass dabei einerseits der Teig besonders knusprig wird und andererseits Fleisch, Gemüse und andere Bestandteile zuverlässig gar gekocht bzw. gebraten werden. Das Backen des Backguts in der Kunststoff-Folie trägt zu diesem guten Backergebnis bei und hat ausserdem den Vorteil, dass keine Backgutreste in den unteren Reflektor 11 fallen. Wesentlich für die Verwendung der Kunststoff-Folie ist es, dass die Backzeit kurz ist, da z. B. auch verhältnismässig gut hitzebeständige Polyester-Folien bei einer Umgebungstemperatur von 300 °C nach etwa 6 Min. zu schmelzen beginnen, wodurch das Backgut ungeniessbar würde. Wie erwähnt, genügen beim erfindungsgemässen Backgerät sehr kurze Backzeiten von etwa 2 Min., um Hamburger, Pizzen usw. zu backen bzw. zu garen, weil die Reflektoren einerseits den Backraum dicht umschliessen und andererseits die gesamte Strahlung auf das Backgut konzentrieren. Um ein Schmelzen der Polyester-Folie infolge irrtümlich zu lange gewählter Backzeit zu vermeiden, ist zweckmässig die an der Schaltuhr 47 des Backgeräts einstellbare Backzeit auf maximal 5 Min. begrenzt.

Selbstverständlich kann im erfindungsgemässen Backgerät auch unverpacktes Backgut gebacken werden, wobei der untere Reflektor 11 an seiner tiefsten Stelle eine Oeffnung aufweisen kann, unter der ein Sammelbehälter, z. B. eine aus dem Gehäuse 1-5 herausziehbare Schublade für vom Backgut herabfallende Brösel, Krumen und dgl. angeordnet werden kann.

Ferner könnte der untere Reflektor auf einem horizontal aus dem Gehäuse heraus bewegbaren Schlitten, z. B. in einer Art Schublade angeordnet und ein geeignetes Getriebe für den oberen Reflektor vorgesehen sein, welches beim Herausziehen des Schlittens bzw. der Schublade aus den Gehäuse den oberen Reflektor hebt oder wie in der Zeichnung dargestellt nach oben schwenkt. Damit würde derselbe Vorteil erreicht wie beim in der Zeichnung dargestellten Ausführungsbeispiel, nämlich durch das Verschieben des unteren Reflektors vom oberen Reflektor weg und aus dem Gehäuse heraus die Gefahr vermieden, dass man sich beim Auflegen des Backguts auf den Rost 15 die Hände am bei längerem Betrieb heissen oberen Reflektor 12 verbrennt. Dieser Vorteil wird beim in der Zeichnung dargestellten Ausführungsbeispiel mit besonders einfachen Führungsmitteln für die beiden Reflektoren 11, 12 erreicht.

Zur Verringerung der Höhe des Backgeräts könnten anstelle des Auftaufachs 7 seitlich am Gehäuse 1-5 angeordnete Auftaufächer vorgesehen werden, die Anordnung des Auftaufachs 7 über den Reflektoren 11, 12 hat aber den Vorteil, dass die Abwärme der Lampen 13, 14 ausgenutzt werden kann. Ferner könnte das Backgerät auch ohne Gehäuse ausgeführt sein, das Gehäuse hat jedoch den Vorteil, dass die Reflektoren darin gegen Beschädigungen geschützt sind, eine Verbrennungsgefahr an der Aussenseite der Reflektoren vermieden wird und in das Gehäuse ein oder mehrere Auftaufächer für tiefgefrorenes Backgut integriert werden können.

Anstelle der Halogenlampen könnten schliesslich auch andere Infrarotstrahlungsquellen vorgesehen werden. Halogenlampen haben demgegenüber den Vorteil einer hohen Lichtausbeute, wobei sie vorzugsweise mit etwas niedrigerer als der vom Hersteller angegebenen Spannung betrieben werden, wodurch sich der Anteil der Infrarotstrahlung gegenüber dem Anteil des sichtbaren Lichts erhöhen lässt.

**Patentansprüche**

1. Infrarotbeheiztes Backgerät mit einem oberen und einem unteren Reflektor (11, 12), in denen je wenigstens eine Infrarotlichtquelle (13, 14) angeordnet ist, wobei der obere Reflektor (12) mittels eines Getriebes (22, 23, 26, 27, 40) aus der Backstellung (Fig. 1), in der er zusammen mit dem unteren Reflektor (11) einen zwischen ihnen angeordneten Rost (15) für das Backgut umschliesst, nach oben bewegbar ist, damit das Backgut eingegeben und entnommen werden kann, dadurch gekennzeichnet, dass das Getriebe (22, 23, 26, 27, 40) eine Schub- oder Parallelführung (26, 27, 40) aufweist, durch die der untere Reflektor (11) mit dem von ihm getragenen Rost (15) vom oberen Reflektor (12) mit horizontaler Bewegegungskomponente unter Beibehaltung der horizontalen Lage des Rosts (15) wegbewegbar ist, und die Bewegungen der beiden Reflektoren (11, 12) durch das Getriebe (22, 23, 26, 27, 40) gekoppelt sind, so dass der obere Reflektor (12) gehoben wird, wenn der untere Reflektor (11) mit horizontaler Bewegungskompente von ihm wegbewegt wird.

2. Gerät nach Anspruch 1, dadurch gekennzeichnet, dass die Schub- oder Parallelführung eine Parallelführung (26, 27, 40) ist, durch die der untere Reflektor (11) gleichzeitig sowohl in horizontaler als auch in vertikaler Richtung vom oberen Reflektor (12) wegbewegbar ist.

3. Gerät nach Anspruch 1 oder 2, bei dem die beiden Reflektoren (11, 12) in einem Gehäuse (1-5) angeordnet sind, dessen Vorderwand (1) eine vorzugsweise schliessbare Oeffnung (38) hat, dadurch gekennzeichnet, dass der untere Reflektor (11) mittels der Schub- oder Parallelführung wenigstens teilweise aus der Oeffnung (38) herausführbar ist.

4. Gerät nach den Ansprüchen 2 und 3, bei dem der obere Reflektor (12) um eine zur Gehäuserückwand (2) wenigstens annähernd parallele, horizontale Achsenlinie (19) aus der Backstellung nach oben schwenkbar gelagert ist, dadurch gekennzeichnet, dass der zum Heben des oberen Reflektors (12) bestimmte Getriebeteil durch wenigstens ein an der Parallelführung (26, 27, 40) angeordnetes Hebeglied (22, 23) gebildet ist.

5. Gerät nach Anspruch 3 oder 4, mit einem zum Verschliessen der Gehäuseöffnung (38) und als Antriebsglied des Getriebes (22, 23, 26, 27, 40) dienenden Verschliessteil (40), dadurch gekennzeichnet, dass der untere Reflektor (11) mit dem Verschliessteil (40) verbunden ist.

6. Gerät nach den Ansprüchen 4 und 5, bei dem der Verschliessteil durch eine nach unten klappbare (41) Türe (40) gebildet ist, dadurch gekennzeichnet, dass die Parallelführung zwei beidseits des unteren Reflektors (11) angeordnete Lenker (26, 27) aufweist, deren eine Enden um eine im unteren Gehäuseteil wenigstens annähernd parallel zur Gehäuserückwand (2) verlaufende, horizontale Achsenlinie (28, 29) schwenkbar gelagert sind, und deren andere Enden je durch ein Drehgelenk (33, 34) mit dem oberen Randbereich (30) des unteren Reflektors (11) verbunden sind, und dass die Hebeglieder durch an den anderen Enden der Lenker (26, 27) abgewinkelt angeformte Führungsschienen (22, 23) für am unteren Randbereich (18) des oberen Reflektors (12) gelagerte Rollen (20, 21) gebildet sind, und die Türe (40) gelenkig (37) mit dem oberen Randbereich (30) des unteren Reflektors (11) verbunden ist, so dass beim Herabklappen der Türe (40) der untere Reflektor (11) aus der Backstellung (Fig. 1) nach vorne und unten geführt und der obere Reflektor (12) mittels den auf den dabei nach oben schwenkenden Führungsschienen (22, 23) laufenden Rollen (20, 21) nach oben geschwenkt wird.

7. Gerät nach einem der Ansprüche 3 bis 6, dadurch gekennzeichnet, dass das Gehäuse (1-5) wenigstens ein mit einer Heizplatte (6, 43) versehenes Auftaufach (7) aufweist, um tiefgefrorenes Backgut vor dem Backen aufzutauen.

8. Gerät nach einem der Ansprüche 1 bis 7, dadurch gekennzeichnet, dass die Infrarotlichtquellen durch Halogenlampen (13, 14) gebildet sind.

9. Gerät nach einem der Ansprüche 1 bis 8, dadurch gekennzeichnet, dass der untere Reflektor an seiner tiefsten Stelle eine Oeffnung aufweist, unter der ein Sammelbehälter für vom Backgut herabfallende Reste angeordnet ist.

10. Gerät nach einem der Ansprüche 1 bis 10, dadurch gekennzeichnet, dass jeder der beiden Reflektoren (11, 12) in Umfangsrichtung abwechselnd ebene und gekrümmte Reflexionsflächen (16, 17) hat, die zusammen mit den Infrarotlichtquellen (13, 14) so angeordnet sind, dass die Strahlungsflussdichte auf der ganzen Rostfläche (15) annähernd konstant ist.

11. Verwendung des Backgeräts nach Anspruch 1, wobei das Backgut in eine für die Infrarotstrahlung durchlässige Kunststoffolie eingepackt und auf den Rost (15) gelegt wird, worauf die Reflektoren (11, 12) in die Backstellung gebracht und die Infrarotlichtquellen (13, 14) eingeschaltet werden.

**Claims**

1. An infra-red-heated baking appliance having an upper and a lower reflector (11, 12) in each of which at least one source (13, 14) of infra-red light is arranged, in which respect the upper reflector (12) is movable upwardly by means of a gearing (22, 23, 26, 27, 40) out of the baking position (Fig. 1), in which it together with the lower reflector (11) encloses a grid (15), arranged between them, for the food to be baked, so that the food to be baked can be inserted and removed, characterised in that the gearing (22, 23, 26, 27, 40) has parallel thrust/guide means (26, 27, 40) by means of which the lower reflector (11) with the grid (15) carried by it can be moved away from the upper reflector (12) with a horizontal motion component whilst maintaining the horizontal position of the grid (15), and the movements of the two reflectors (11, 12) are coupled by the gearing (22, 23, 26, 27, 40), so that the upper reflector (12) is raised when the lower reflector (11) is moved with a horizontal motion component away from it.

2. An appliance according to claim 1, characterised in that the parallel thrust guide means comprise parallel levers (26, 27, 40) by means of which the lower reflector (11) can be moved simultaneously both in the horizontal and in the vertical direction away from the upper reflector (12).

3. An appliance according to claim 1 or 2, in which the two reflectors (11, 12) are arranged in a housing (1-5), the front wall (11) of which has a preferably closable opening (38), characterised in that the lower reflector (11) can be conducted at least partially out of the opening (38) by means of the parallel thrust/ guide means.

4. An appliance according to claims 2 and 3, in which the upper reflector (12) is mounted so as to be swingable upwardly out of the baking position about a horizontal axis (19), which is disposed substantially parallel to the housing rear wall (2), characterised in that the gearing part intended for raising the upper reflector (12) is formed by at least one lifting member (22, 23) arranged on the parallel guide means (26, 27, 40).

5. An appliance according to claim 3 or 4, wherein closure means (40) serving for closing of the housing opening (38) also acts as driving member of the gearing (22, 23, 26, 27, 40), characterised in that the lower reflector (11) is connected to the closure means (40).

6. An appliance according to claims 4 and 5, wherein the closure means is in the form of a door (40) which is downwardly tiltable (at 41), characterised in that the parallel guide means includes two guide rods (26, 27) which are arranged on respective sides of the lower reflector (11), each having one end mounted so as to be swingable about a horizontal axis (28, 29) extending in the lower housing part substantially parallel to the housing rear wall (92), and the other end connected by a hinge joint (33, 34) to the upper edge region (30) of the lower reflector (11), and in that the lifting members are formed by guide rails (22, 23), integrally formed in angled manner at the other ends of the guide rods (26, 27), for rollers (20, 21) mounted at the lower edge region (18) of the upper reflector (12), and the door (40) is connected hingedly (37) to the upper edge region (30) of the lower reflector (11), so that, upon the tilting down of the door (40), the lower reflector (11) is conducted forwardly and downwardly out of the baking position (Fig. 1) and the upper reflector (12) is swung upwardly by virtue of the rollers (20, 21) running along the guide rails (22, 23) which themselves swing upwardly.

7. An appliance according to one of claims 3 to 6, characterised in that the housing (1— 5) has at least one thawing compartment (7) provided with a heating plate (6, 43), in order to thaw deep-frozen food to be baked prior to the baking.

8. An appliance according to one of claims 1 to 7, characterised in that the sources of infra-red light are formed by halogen lamps (13, 14).

9. An appliance according to one of claims 1 to 8, characterised in that the lower reflector has at its lowest point an opening under which is arranged a collecting container for residues dropping down from the food to be baked.

10. An appliance according to one of claims 1 to 10, characterised in that each of the two reflectors (11, 12) has, in the circumferential direction, alternately flat and curved reflection surfaces (16, 17) which together with the sources (13, 14) of infra-red light are so arranged that the radiation flux density is approximately constant over the entire grid surface (15).

11. Use of the baking appliance according to claim 1, in which respect the food to be baked is packed into plastics foil which is transmissive for the infra-red radiation, and is placed onto the grid (15), whereupon the reflectors (11, 12) are brought into the baking position and the sources (13, 14) of infra-red light are switched on.

**Revendications**

1. Appareil de cuisson au four chauffé par infrarouges, présentant des réflecteurs supérieur et inférieur (11, 12) dans lesquels se trouve au moins une source respective de lumière infrarouge (13, 14), un mouvement vers le haut pouvant être imprimé au réflecteur supérieur (12), au moyen d'une transmission (22, 23, 26, 27, 40), à partir de la position de cuisson (figure 1) dans laquelle il entoure, conjointement au réflecteur inférieur (11), une grille intercalaire (15) destinée au produit à cuire, de telle sorte que ce produit à cuire puisse être enfourné et défourné, caractérisé par le fait que la transmission (22, 23, 26, 27, 40) comporte un guidage coulissant ou parallèle (26, 27, 40) par l'intermédiaire duquel le réflecteur inférieur (11), ainsi que la grille (15) qu'il supporte, peuvent être déplacés à l'écart du réflecteur supérieur (12) avec une composante horizontale de mouvement, tout en conservant la position horizontale de la grille (15), les mouvements des deux réflecteurs (11, 12) étant couplés par l'intermédiaire de la transmission (22, 23, 26, 27, 40), de façon que le réflecteur supérieur (12) soit soulevé lorsque le réflecteur inférieur (11) est déplacé à l'écart de ce dernier avec une composante horizontale de mouvement.

2. Appareil selon la revendication 1, caractérisé par le fait que le guidage coulissant ou parallèle est un guidage parallèle (26, 27, 40) par l'intermédiaire duquel le réflecteur inférieur (11) peut être simultanément déplacé à l'écart du réflecteur supérieur (12), tant dans le sens horizontal que dans le sens vertical.

3. Appareil selon la revendication 1 ou 2, dans lequel les deux réflecteurs (11, 12) sont disposés dans un boîtier (1-5) dont la paroi antérieure (1) présente une ouverture (38) de préférence obturable, caractérisé par le fait que le réflecteur inférieur (11) peut être extrait au moins partiellement de l'ouverture (38), au moyen du guidage coulissant ou parallèle.

4. Appareil selon les revendications 2 et 3, dans lequel le réflecteur supérieur (12) est monté à pivotement vers le haut, à partir de la position de cuisson, autour d'une ligne axiale horizontale (19) au noins approximativement parallèle à la paroi postérieure (2) du boîtier, caractérisé par le fait que la partie de la transmission destinée à soulever le réflecteur supérieur (12) est formée par au moins un organe de levage (22, 23) disposé sur le guidage parallèle (26, 27, 40).

5. Appareil selon la revendication 3 ou 4, muni d'une pièce d'obturation (40) servant à obturer l'ouverture (38) du boîtier et faisant fonction d'organe d'entraînement de la transmission (22, 23, 26, 27, 40), caractérisé par le fait que le réflecteur inférieur (11) est relié à la pièce d'obturation (40).

6. Appareil selon les revendications 4 et 5, dans lequel la pièce d'obturation est formée par une porte (40) rabattable (41) vers le bas, caractérisé par le fait que le guidage parallèle comprend deux biellettes (26, 27) situées de part et d'autre du réflecteur inférieur (11), dont les unes des extrémités sont montées pivotantes autour d'une ligne axiale horizontale (28, 29) s'étendant, dans la partie inférieure du boîtier, au moins approximativement parallèlement à la paroi postérieure (2) de ce boîtier, et dont les autres extrémités sont reliées à la région marginale supérieure (30) du réflecteur inférieur (11), par l'intermédiaire d'une articulation tournante respective (33, 34) ; et par le fait que les organes de levage sont formés par des rails de guidage (22, 23) ménagés solidairement par coudage sur les autres extrémités des biellettes (26, 27), pour des galets (20, 21) montés dans la région marginale inférieure (18) du réflecteur supérieur (12), la porte (40) étant reliée de manière articulée (37) à la région marginale supérieure (30) du réflecteur inférieur (11), de telle sorte que, lors du rabat de la porte (40), le réflecteur inférieur (11) soit guidé vers l'avant et vers le bas à partir de la position de cuisson (figure 1), et qu'un pivotement vers le haut soit imprimé au réflecteur supérieur (12) au moyen des galets (20, 21) roulant sur les rails de guidage (22, 23) qui accomplissent alors un pivotement vers le haut.

7. Appareil selon l'une des revendications 3 à 6, caractérisé par le fait que le boîtier (1-5) présente au moins un compartiment de décongélation (7) muni d'une plaque chauffante (6, 43), afin de décongeler un produit surgelé avant sa cuisson au four.

8. Appareil selon l'une des revendications 1 à 7, caractérisé par le fait que les sources de lumière infrarouge sont formées par des lampes halogènes (13, 14).

9. Appareil selon l'une des revendications 1 à 8, caractérisé par le fait que le réflecteur inférieur comporte, dans sa zone la plus profonde, une ouverture au-dessous de làquelle est disposé un récipient collecteur de résidus tombant du produit à cuire.

10. Appareil selon l'une des revendications 1 à 9, caractérisé par le fait que chacun des deux réflecteurs (11, 12) présente des surfaces réflectrices (16, 17) qui sont alternativement planes et curvilignes dans le sens périphérique et sont disposées, conjointement aux sources de lumière infrarouge (13, 14), de telle sorte que l'intensité du flux de rayonnement soit approximativement constante sur toute la superficie de la grille (15).

11. Utilisation de l'appareil de cuisson au four selon la revendication 1, dans laquelle le produit à cuire est emballé dans une feuille de matière plastique perméable au rayonnement infrarouge, puis est déposé sur la grille (15), après quoi les réflecteurs (11, 12) sont amenés à la position de cuisson et les sources de lumière infrarouge (13, 14) sont enclenchées.

FIG.1

FIG.2

0 121 646

FIG. 3

FIG. 4